# EUROPÄISCHE PATENTSCHRIFT

(11) **EP 2 890 532 B1**
(45) Veröffentlichungstag und Bekanntmachung des Hinweises auf die Patenterteilung: **01.06.2016**
(21) Anmeldenummer: 13747978.8
(22) Anmeldetag: 09.08.2013
(51) Int. Cl.: B26D 3/16, B26D 7/08, B26F 3/06, F16L 33/207

(54) **VERFAHREN ZUM ABLÄNGEN EINES SCHLAUCH-TEILSTÜCKES VON EINEM SCHLAUCH**
METHOD FOR CUTTING A TUBE SECTION INTO LENGTHS
MÉTHODE POUR DIVISER UNE PORTION DE TUBE EN PLUSIEURS PORTIONS

(30) Priorität: 29.08.2012 US 201213597731; 30.08.2012 US 201261694839 P
(43) Veröffentlichungstag der Anmeldung: 08.07.2015
(73) Patentinhaber: Neoperl GmbH, 79379 Müllheim (DE)
(72) Erfinder: SCHLITTER, Roger, 79117 Freiburg (DE); KURY, Werner, 79379 Müllheim (DE)
(74) Vertreter: Börjes-Pestalozza, Henrich
(86) Internationale Anmeldenummer: PCT/EP2013/002401
(87) Internationale Veröffentlichungsnummer: WO 2014/032764

(56) Entgegenhaltungen:
- US-A1- 2008 016 936

## Beschreibung

Die Erfindung betrifft ein Verfahren zum Ablängen eines Schlauch-Teilstückes von einem Schlauch, welcher Schlauch einen Innenschlauch und eine den Innenschlauch umschließende äußere Schlauchummantelung aufweist, wobei das Schlauch-Teilstück mit Hilfe eines Schneidwerkzeuges an einer Schnittstelle in einer quer zur Längserstreckung des Schlauches orientierten Schnittebene von diesem abgetrennt wird, wobei die Schlauchummantelung des Schlauches mittels einer durchtrennbaren Schlauchfixierung umhüllt wird, welche die vorgesehene Schnittstelle überdeckt, bevor das Schlauch-Teilstück an der Schnittstelle vom Schlauch mit Hilfe des Schneidwerkzeuges abgetrennt wird, wobei die Schlauchfixierung die äußere Schlauchummantelung in Umfangsrichtung vollständig umschließt, und wobei die Schlauchfixierung auf der Schlauchummantelung derart fixiert und/oder der von der Schlauchfixierung umschlossene Schlauch mit Hilfe des Schneidwerkzeuges derart durchtrennt wird, dass eine Relativverschiebung der Schlauchfixierung gegenüber der Schlauchummantelung beziehungsweise der Schlauchummantelung gegenüber dem Innenschlauch verhindert ist.

Die Erfindung befasst sich auch mit einem Schlauchstück, das einen Innenschlauch und eine den Innenschlauch umschließende äußere Schlauchummantelung hat, welche Schlauchummantelung von einer abgelängten, durchtrennbaren Schlauchfixierung umhüllt ist, die bis zu einer durch ein stirnseitiges Ende des Schlauchstückes gebildeten und quer zur Längserstreckung des Schlauchstückes orientierten Schnittebene reicht und die die äußere Schlauchummantelung in Umfangsrichtung mit einem Umschlingungswinkel von wenigstens 360° mindestens vollständig umschließt, wobei die Schlauchfixierung derart auf der äußeren Schlauchummantelung fixiert ist, dass eine Relativverschiebung der Schlauchfixierung gegenüber der Schlauchummantelung beziehungsweise der Schlauchummantelung gegenüber dem Innenschlauch verhindert ist.

Aus der US 2008/0016936 A1 ist bereits ein Verfahren der eingangs erwähnten Art bekannt, das zum Ablängen eines Schlauch-Teilstückes von einem Schlauch verwendet wird, der einen Innenschlauch und eine den Innenschlauch umschließende äußere Schlauchummantelung aufweist, die als ein aus Metall- oder Kunststofffäden gebildetes Geflecht ausgestaltet ist. Um das Schlauch-Teilstück mit Hilfe eines Schneidwerkzeuges an einer Schnittstelle in einer quer zur Längserstreckung des Schlauches orientierten Schnittebene vom Schlauch abtrennen zu können, sieht das vorbekannte Verfahren vor, die Schlauchummantelung des Schlauches mittels einer durchtrennbaren Schlauchfixierung zu umhüllen, welche die vorgesehene Schnittstelle überdeckt, bevor das Schlauch-Teilstück an der Schnittstelle vom Schlauch mit Hilfe des Schneidwerkzeuges abgetrennt wird. Das vorbekannte Verfahren verhindert zwar, dass sich einzelne Metall- oder Kunststofffäden des als Schlauchummantelung vorgesehenen Geflechts verhaken können, wenn auf das derart abgelängte Schlauch-Teilstück eine Klemmhülse aufgeschoben werden soll; meist weisen diese Klemmhülsen jedoch einen im Vergleich zum Außendurchmesser des Schlauch-Teilstückes derart angepassten Klemmhülseninnendurchmesser auf, dass beim Aufschieben der Klemmhülse die Gefahr besteht, dass die Schlauchfixierung gegenüber der Schlauchummantelung und zusätzlich oder statt dessen die Schlauchummantelung gegenüber dem Innenschlauch zurückgeschoben wird, wodurch wiederum die Klemmhülse nicht ausreichend sicher und fest auf dem entsprechenden Ende des Schlauch-Teilstückes gehalten wird. Wird die Klemmhülse demgegenüber mit einem im Vergleich zum Außendurchmesser des Schlauchgeflechtes wesentlich größeren Innendurchmesser hergestellt, um in unverformtem Zustand einen großen radialen Abstand zwischen diesen Teilen zu erreichen und um eine Kollision der Geflechtenden mit der Klemmhülse beim Aufschiebevorgang zu vermeiden, wirkt sich dieser große radiale Abstand beim nachfolgenden Crimpvorgang nachteilig aus.

Es besteht daher insbesondere die Aufgabe, das eingangs erwähnte Verfahren derart zu verbessern, dass das Risiko minimiert wird, dass die Schlauchfixierung gegenüber der Schlauchummantelung oder die Schlauchummantelung gegenüber dem Innenschlauch beim Aufschieben eines Schlauch-Endstücks verschoben wird.

Darüber hinaus besteht die Aufgabe, ein Schlauchstück der eingangs erwähnten Art zu schaffen, welches beim Aufschieben eines Schlauch-Endstückes das Risiko minimiert, dass die Schlauchfixierung gegenüber der Schlauchummantelung oder die Schlauchummantelung gegenüber dem Innenschlauch verschoben wird.

Die erfindungsgemäße Lösung dieser Aufgabe besteht bei dem Verfahren und dem Schlauchstück der eingangs erwähnten Art darin, dass die als einseitig klebendes Klebeband ausgestaltete Schlauchfixierung ein den Schlauch vollständig umschließendes Mittelstück hat, an das sich beidseits Schlauchfixierungs-Endstücke anschließen, dass die Schlauchfixierungs-Endstücke mit ihren Klebflächen aneinander anliegen und dass die mit ihren Klebeflächen aneinander anliegenden Schlauchfixierungs-Endstücke derart an den Schlauch angelegt sind, dass die Klebefläche eines der Schlauchfixierungs-Endstücke mit einem über das andere Schlauchfixierungs-Endstück überstehenden Teilbereich an dem Schlauch oder an dem Schlauch-Teilstück klebend gehalten ist.

Auch bei dem erfindungsgemäßen Verfahren wird die Schlauchummantelung vor dem Ablängen eines Schlauch-Teilstückes mittels einer durchtrennbaren Schlauchfixierung umhüllt, welche die vorgesehene Schnittstelle überdeckt, bevor das Schlauch-Teilstück an der Schnittstelle vom Schlauch mit Hilfe des Schneidwerkzeuges durchtrennt wird. Das erfindungsgemäße Verfahren sieht hierbei vor, dass die Schlauchfixierung die äußere Schlauchummantelung in Umfangsrichtung vollständig umschließt und somit die Schlauchummantelung mindestens über 360° des Umfangs überdeckt oder umschlingt. Dabei wird die Schlauchfixierung auf der Schlauchummantelung derart fixiert und/oder der von der Schlauchfixierung umschlossene Schlauch mit Hilfe eines Schneidwerkzeuges derart durchtrennt, dass eine Relativverschiebung der Schlauchfixierung gegenüber der Schlauchummantelung beziehungsweise der Schlauchummantelung gegenüber dem Innenschlauch verhindert ist.

Das erfindungsgemäße Schlauchstück weist einen Innenschlauch und eine den Innenschlauch umschließende äußere Schlauchummantelung auf. Diese Schlauchummantelung ist von einer abgelängten durchtrennbaren Schlauchfixierung umhüllt, die bis zu einer durch ein stirnseitiges Ende des Schlauchstückes gebildeten und quer zur Längserstreckung des Schlauchstückes orientierten Schnittebene reicht. Diese Schlauchfixierung umschließt die äußere Schlauchummantelung in Umfangsrichtung mit einem Umschlingungswinkel von wenigstens 360° zumindest vollständig. Dabei ist die Schlauchfixierung derart auf der äußeren Schlauchummantelung fixiert, dass eine Relativverschiebung der Schlauchfixierung gegenüber der Schlauchummantelung beziehungsweise der Schlauchummantelung gegenüber dem Innenschlauch verhindert ist.

Um nun das Aufbringen einer Schlauchfixierung auf einen Schlauch wesentlich zu erleichtern, ist erfindungsgemäß vorgesehen, dass die als einseitig klebendes Klebeband ausgestaltete Schlauchfixierung ein den Schlauch vollständig umschließendes Mittelstück hat, an das sich beidseits Schlauchfixierungs-Endstücke anschließen, dass die Schlauchfixierungs-Endstücke mit ihren Klebflächen aneinander anliegen und dass die mit ihren Klebeflächen aneinander anliegenden Schlauchfixierungs-Endstücke derart an den Schlauch angelegt sind, dass die Klebefläche eines der Schlauchfixierungs-Endstücke mit einem über das andere Schlauchfixierungs-Endstück überstehenden Teilbereich an dem Schlauch oder an dem Schlauch-Teilstück klebend gehalten ist.

Die nachstehend beschriebenen Ausführungsbeispiele lassen sich sowohl mit dem erfindungsgemäßen Verfahren als auch bei dem erfindungsgemäßen Schlauchstück vorteilhaft realisieren:
Um beim Ablängen des Schlauch-Teilstückes unerwünschte Querkräfte zu vermeiden, die ein Verschieben der Schlauchfixierung gegenüber der Schlauchummantelung oder gar der Schlauchummantelung gegenüber dem Innenschlauch zumindest in axialer Richtung bewirken könnte, sieht eine weiterbildende Ausführungsform gemäß der Erfindung vor, dass der Schlauch mittels eines als Schneidwerkzeug dienenden und etwa senkrecht zur Schlauch-Längsrichtung geführtes Schneidmesser abgelängt wird. Mit Hilfe eines solchen, etwa senkrecht zur Schlauch-Längsrichtung geführten Schneidmesser kann das Schlauch-Teilstück vom Schlauch an der gewünschten Schnittstelle gut abgelängt werden.

Möglich ist aber auch, dass der Schlauch mittels eines eine Schneidhitze entwickelnden Schneidwerkzeuges abgelängt wird und zwar vorzugsweise derart, dass das während der Schneidhitze teigig werdende Kunststoffmaterial wenigstens eines der Bestandteile: Schlauchfixierung, Schlauchummantelung oder Innenschlauch zumindest bereichsweise wenigstens eines der benachbarten Bestandteile verklebt, verschmilzt oder dergleichen fixiert, um die Relativposition zwischen der Schlauchummantelung und dem Innenschlauch zu sichern. Wird eine beispielsweise aus Kunststofffäden hergestellte Schlauchummantelung mittels eines solchen, eine Schneidhitze entwickelnden Schneidwerkzeuges abgelängt, kann das durch die Schneidhitze teigig werdende Kunststoffmaterial der Kunststofffäden sich derart an der Schlauchummantelung und/oder dem Innenschlauch verkleben oder verschmelzen, dass eine Relativverschiebung dieser Bestandteile zumindest in axialer Richtung vermieden wird.

Eine bevorzugte Ausführungsform gemäß der Erfindung sieht vor, dass auf das mit Hilfe der Schlauchfixierung gesicherte Ende des Schlauch-Teilstückes eine Klemmhülse, eine Crimphülse oder ein hülsenförmiges Schlauch-Endstück aufgeschoben ist und dass die Schlauchfixierung über das innenliegende Ende der Klemmhülse, Crimphülse oder dem Schlauch-Endstück vorsteht und einen Knickschutz bildet.

Weiterbildungen gemäß der Erfindung ergeben sich aus den Figuren in Verbindung mit den Ansprüchen sowie der Beschreibung. Nachstehend wird die Erfindung anhand bevorzugter Ausführungsbeispiele noch näher beschrieben.

Es zeigen:
- Fig. 1 bis 4: einzelne Verfahrensschritte eines zum Ablängen eines Schlauch-Teilstückes bestimmten Verfahrens, wobei auf den abzulängenden Schlauch eine als Klebeband ausgestaltete Schlauchfixierung aufgebracht wird, die ein den Schlauch vollständig umschließendes Mittelstück hat, an das sich beidseits Schlauch-Endstücke anschließen,
- Fig.5 und 6: eine über ein Schlauch-Endstück vorstehende und als Knickschutz dienende Schlauchfixierung in einer Seitenansicht (Fig.5) und einer perspektivischen Darstellung (Fig. 6),
- Fig. 7 und 8: die zum Ablängen eines Schlauch-Teilstückes bestimmten Verfahrensschritte, wobei hier ein Guillotine-ähnliches Schneidwerkzeug verwendet wird, das während des Schneidvorganges etwa senkrecht zur Schlauch-Längsrichtung geführt wird,
- Fig. 9 und 10: die zum Ablängen eines Schlauch-Teilstückes bestimmten Verfahrensschritte, wobei der Schlauch hier mittels eines eine Schneidhitze entwickelnden Schneidwerkzeuges abgelängt wird, und
- Fig.11: einen zum Ablängen eines Schlauch-Teilstückes vorbereiteten Schlauch, der im Bereich der vorgesehenen Schnittstelle eine als den Schlauch in einem Teilabschnitt in Umfangsrichtung vollständig umschließende Schlauchumspritzung ausgebildet ist.

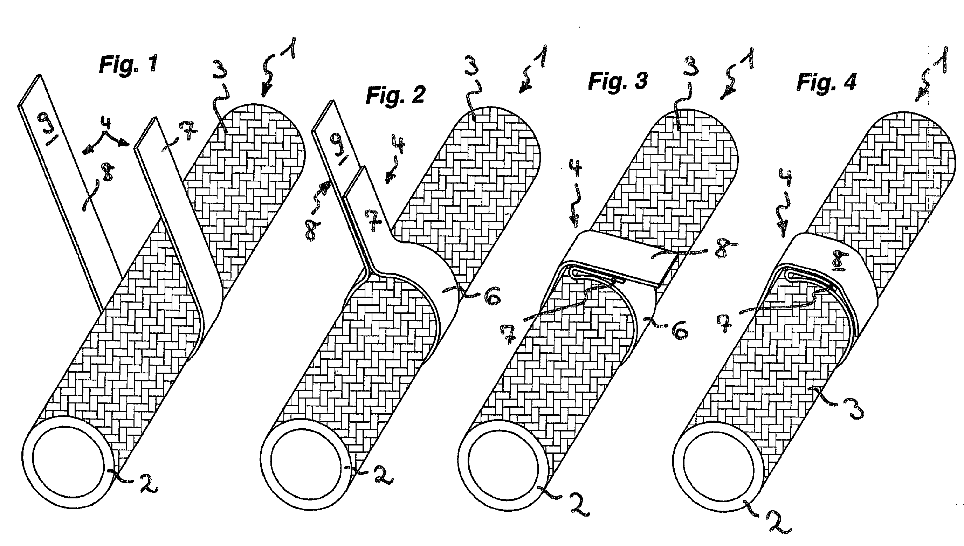

In den Fig. 1 bis 11 sind verschiedene Varianten eines erfindungsgemäßen Verfahrens dargestellt, das zum Ablängen eines Schlauch-Teilstückes 1 von einem flexiblen Schlauch und zur Herstellung eines abgelängten Schlauchstückes 1 bestimmt ist. Der für das Schlauch-Teilstück 1 verwendete Schlauch weist einen Innenschlauch 2 und eine den Innenschlauch 2 umschließende äußere Schlauchummantelung 3 auf. Die Schlauchummantelung 3 ist hier als Geflecht ausgebildet, das durch miteinander verwobene Metall- oder Kunststofffäden hergestellt wird. Möglich ist auch, ein Hybrid-Geflecht zu verwenden, dessen Geflechtfäden teils aus Kunststoff und teils aus Metall bestehen.

Das Schlauch-Teilstück 1, das beispielsweise zur Herstellung eines als flexible sanitäre Schlauchleitung ausgebildeten Schlauchstückes benötigt wird, wird mit Hilfe eines Schneidwerkzeuges an einer Schnittstelle in einer quer zur Längserstreckung des Schlauches orientierten Schnittebene von diesem abgetrennt. Die Schlauchummantelung 3 ist dazu mittels einer durchtrennbaren Schlauchfixierung 4 umhüllt, welche die vorgesehene Schnittstelle überdeckt, bevor das Schlauch-Teilstück 1 an der Schnittstelle vom Schlauch mit Hilfe des Schneidwerkzeuges abgetrennt wird.

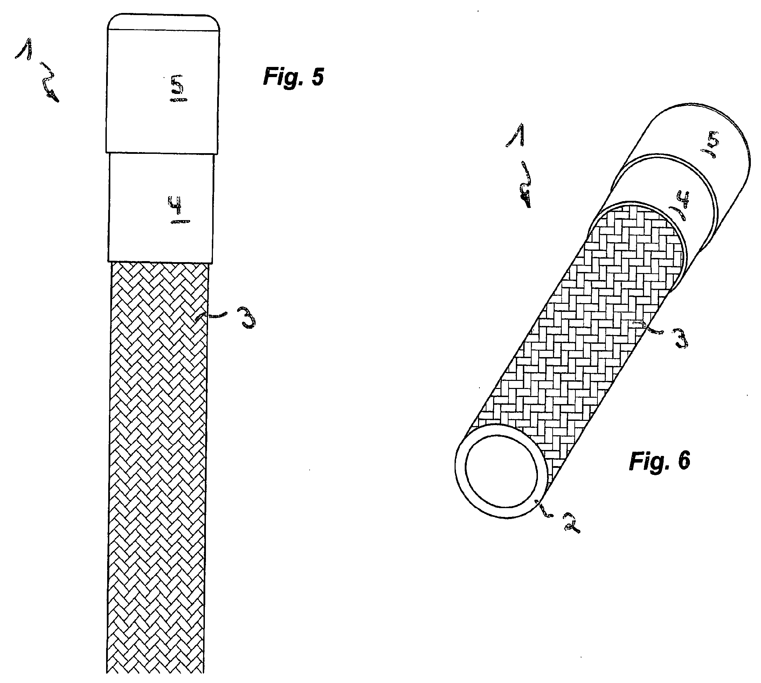

Sanitäre Schlauchleitungen weisen an den beiden Stirnenden meist ein beispielsweise auch als Klemm- oder Crimphülse ausgebildetes hülsenförmiges Schlauch-Endstück 5 auf (vgl. Fig. 5 und 6). Da der lichte Hülseninnendurchmesser eines solchen Schlauch-Endstückes 5 etwa dem Außendurchmesser der insbesondere mit einer Schlauchfixierung 4 versehenen Schlauchummantelung 3 nahezu entspricht, besteht die Aufgabe, das Risiko zu minimieren, dass die Schlauchfixierung 4 gegenüber der Schlauchummantelung 3 oder die Schlauchummantelung 3 gegenüber dem Innenschlauch 2 beim Aufschieben eines Schlauch-Endstückes 5 verschoben wird.

Zur Lösung dieser Aufgabe ist bei den hier dargestellten Verfahrensvarianten vorgesehen, dass die Schlauchfixierung 5 die äußere Schlauchummantelung 3 in Umfangsrichtung vollständig umschließt und darauf derart fixiert und/oder der von der Schlauchfixierung 4 umschlossene Schlauch mit Hilfe des Schneidwerkzeuges derart durchtrennt wird, dass eine Relativverschiebung der Schlauchfixierung 4 gegenüber der Schlauchummantelung 3 beziehungsweise der Schlauchummantelung 3 gegenüber dem Innenschlauch 2 verhindert ist.

In den Fig. 1 bis 4 ist das erfindungsgemäße Verfahren veranschaulicht, bei dem die Schlauchfixierung 4 durch ein einseitig klebendes Klebeband gebildet ist. Ein als Schlauchfixierung 4 dienendes Klebeband kann praktisch an jeder Stelle eines gegebenenfalls auch langen Schlauches positioniert und aufgebracht werden. Darüber hinaus bietet ein einseitig klebendes Klebeband den Vorteil, dass das Klebeband derart fest auf den Schlauch aufgezogen werden kann, dass das als Schlauchfixierung 4 dienende Klebeband auf der Schlauchummantelung 3 und die Schlauchummantelung 3 auf dem Innenschlauch 2 fixiert und eine unbeabsichtigte Relativverschiebung dieser Bestandteile 2, 3 und 4 verhindert wird.

Bei der in Fig. 1 bis 4 gezeigten Vorgehensweise weist die als Klebeband ausgestaltete Schlauchfixierung 4 ein den Schlauch vollständig umschließendes Mittelstück 6 auf, an das sich beidseits Schlauchfixierungs-Endstücke 7, 8 anschließen. Diese Schlauchfixierungs-Endstücke 7, 8 liegen mit ihren Klebeflächen 9 aneinander an, wobei die mit ihren Klebeflächen 9 aneinander anliegenden Schlauchfixierung-Endstücke 7, 8 derart an den Schlauch angelegt sind, dass die Klebefläche 9 eines der Schlauchfixierungs-Endstücke 7, 8 mit einem über das andere Schlauchfixierungs-Endstück 8, 7 überstehenden Teilbereich an dem Schlauch oder dem Schlauchteilstück 1 klebend gehalten ist.

Da somit sichergestellt ist, dass die Schlauchfixierungs-Endstücke 7, 8 nicht störend über den Schlauch vorstehen, lässt sich ein Schlauch-Endstück 5 leicht über das stirnseitige Ende eines Schlauches aufschieben.

In den Fig. 5 und 6 soll verdeutlicht werden, dass die Breite der Schlauchfixierung 4 in Längsrichtung des Schlauches so bemessen sein kann, dass die über das innenliegende Ende des Schlauch-Endstückes 5 vorstehende Schlauchfixierung 4 einen Knickschutz bildet.

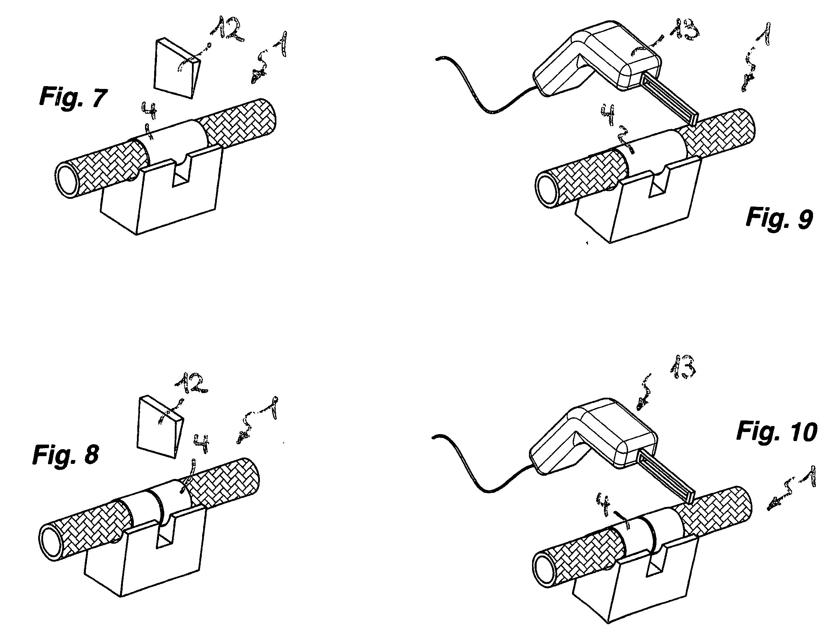

In den Fig. 7 bis 10 ist gezeigt, dass der von der Schlauchfixierung 4 vollständig umschlossene Schlauch mit Hilfe des Schneidwerkzeuges derart durchtrennt werden kann, dass eine Relativverschiebung der Schlauchfixierung 4 gegenüber der Schlauchummantelung 3 beziehungsweise der Schlauchummantelung 3 gegenüber dem Innenschlauch 2 verhindert ist. In Fig. 7und 8 ist dazu vorgesehen, dass der Schlauch mittels eines als Schneidwerkzeug dienenden und etwa senkrecht zur Schlauch-Längsachse geführten Schneidmessers 12 abgelängt wird.

Bei dem in Fig. 9 und 10 veranschaulichten Ausführungsbeispiel wird der Schlauch mittels eines eine Schneidhitze entwickelnden Schneidwerkzeuges 13 abgelängt, und zwar derart, dass das während der Schneidhitze teigig werdende Kunststoffmaterial wenigstens eines der Bestandteile: Schlauchfixierung 4, Schlauchummantelung 3 oder Innenschlauch 2 zumindest bereichsweise an wenigstens einer der benachbarten Bestandteile 2, 3, 4 verklebt oder verschmilzt. Statt des hier lötkolbenartig ausgebildeten Schneidwerkzeuges 13 kann gegebenenfalls eine Laserapparatur mit einem, ebenfalls eine Schneidhitze entwickelnden Laserstrahl verwendet werden.

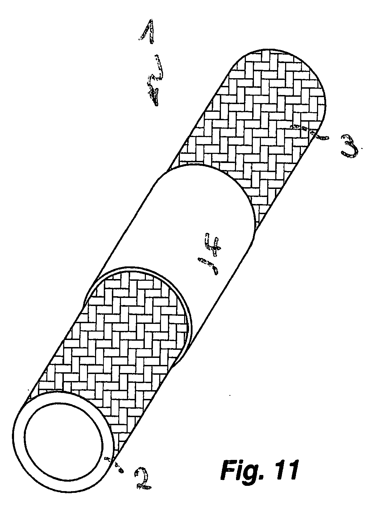

In Fig. 11 ist gezeigt, dass die Schlauchfixierung 4 auch als eine die Schlauchummantelung 3 in einem Teilabschnitt in Umfangsrichtung vollständig umschließende Schlauchumhüllung mittels Spritzgussverfahrens ausgebildet sein kann.

Unabhängig davon, ob für die Schlauchfixierung 4 ein Klebeband, ein Schrumpfschlauch oder eine mittels Spritzgussverfahrens hergestellte Schlauchumhüllung verwendet wird, ist es zweckmäßig, wenn die Schlauchfixierung eine geringfügige Dicke und vorzugsweise eine Dicke von 0,5/100stel bis 8/100stel mm aufweist.

## Patentansprüche

1. Verfahren zum Ablängen eines Schlauch-Teilstückes (1) von einem Schlauch, welcher Schlauch einen Innenschlauch (2) und eine den Innenschlauch (2) umschließende äußere Schlauchummantelung (3) aufweist, wobei das Schlauch-Teilstück (1) mit Hilfe eines Schneidwerkzeuges an einer Schnittstelle in einer quer zur Längserstreckung des Schlauches orientierten Schnittebene von diesem abgetrennt wird, wobei die Schlauchummantelung (3) des Schlauches mittels einer durchtrennbaren Schlauchfixierung (4) umhüllt wird, welche die vorgesehene Schnittstelle überdeckt, bevor das Schlauch-Teilstück (1) an der Schnittstelle vom Schlauch mit Hilfe des Schneidwerkzeuges abgetrennt wird, wobei die Schlauchfixierung (4) die äußere Schlauchummantelung (3) in Umfangsrichtung vollständig umschließt, und wobei die Schlauchfixierung (4) auf der Schlauchummantelung (3) derart fixiert und/oder der von der Schlauchfixierung (4) umschlossene Schlauch mit Hilfe des Schneidwerkzeuges derart durchtrennt wird, dass eine Relativverschiebung der Schlauchfixierung (4) gegenüber der Schlauchummantelung (3) beziehungsweise der Schlauchummantelung (3) gegenüber dem Innenschlauch (2) verhindert ist, **dadurch gekennzeichnet, dass** die als einseitig klebendes Klebeband ausgestaltete Schlauchfixierung (4) ein den Schlauch vollständig umschließendes Mittelstück (6) hat, an das sich beidseits Schlauchfixierungs-Endstücke (7, 8) anschließen, dass die Schlauchfixierungs-Endstücke (7, 8) mit ihren Klebeflächen (9) aneinander anliegen und dass die mit ihren Klebeflächen (9) aneinander anliegenden Schlauchfixierungs-Endstücke (7, 8) derart an den Schlauch angelegt sind, dass die Klebefläche (9) eines der Schlauchfixierungs-Endstücke (7, 8) mit einem über das andere Schlauchfixierungs-Endstück (7, 8) überstehenden Teilbereich an dem Schlauch oder an dem Schlauch-Teilstück klebend gehalten ist.

2. Schlauchstück (1) mit einem Innenschlauch (2) und einer den Innenschlauch (2) umschließenden äußeren Schlauchummantelung (3), welche Schlauchummantelung (3) von einer abgelängten durchtrennbaren Schlauchfixierung (4) umhüllt ist, die bis zu einer durch ein stirnseitiges Ende des. Schlauchstückes gebildeten und quer zur Längserstreckung des Schlauchstückes (1) orientierten Schnittebene reicht, und die (4) die äußere Schlauchummantelung (3) in Umfangsrichtung mit einem Umschlingungswinkel von wenigstens 360° mindestens vollständig umschließt, wobei die Schlauchfixierung (4) derart auf der äußeren Schlauchummantelung (3) fixiert ist, dass eine Relativverschiebung der Schlauchfixierung (4) gegenüber der Schlauchummantelung (3) beziehungsweise der Schlauchummantelung (3) gegenüber dem Innenschlauch (2) verhindert ist, **dadurch gekennzeichnet, dass** die als einseitig klebendes Klebeband ausgestaltete Schlauchfixierung (4) ein den Schlauch vollständig umschließendes Mittelstück (6) hat, an das sich beidseits Schlauchfixierungs-Endstücke (7, 8) anschließen, dass die Schlauchfixierungs-Endstücke (7, 8) mit ihren Klebeflächen (9) aneinander anliegen und dass die mit ihren Klebeflächen (9) aneinander anliegenden Schlauchfixierungs-Endstücke (7, 8) derart an den Schlauch angelegt sind, dass die Klebefläche (9) eines der Schlauchfixierungs-Endstücke (7, 8) mit einem über das andere Schlauchfixierungs-Endstück (7, 8) überstehenden Teilbereich an dem Schlauch oder an dem Schlauch-Teilstück klebend gehalten ist.

3. Verfahren oder Schlauchstück nach einem der Ansprüche 1 oder 2, **dadurch gekennzeichnet, dass** der Schlauch mittels eines als Schneidwerkzeug dienenden und etwa senkrecht zur Schlauch-Längsrichtung geführten Schneidmesser (12) abgelängt wird.

4. Verfahren oder Schlauchstück nach einem der Ansprüche 1 bis 3, **dadurch gekennzeichnet, dass** auf das mit Hilfe der Schlauchfixierung (4) gesicherte Ende des Schlauch-Teilstückes (1) eine Klemmhülse, eine Crimphülse oder dergleichen Schlauch-Endstück (5) aufgeschoben ist und dass die Schlauchfixierung (4) über das innenliegende Ende des Schlauch-Endstückes (5) vorsteht und einen Knickschutz bildet.

5. Verfahren oder Schlauchstück nach einem der Ansprüche 1 bis 4, **dadurch gekennzeichnet, dass** der Schlauch mittels eines eine Schneidhitze entwickelnden Schneidwerkzeuges (13) abgelängt wird, und zwar vorzugsweise derart, dass das während der Schneidhitze teigig werdende Kunststoffmaterial wenigstens eines der Bestandteile: Schlauchfixierung (4), Schlauchummantelung (3) beziehungsweise Innenschlauch (2) zumindest bereichsweise an wenigstens einer der benachbarten Bestandteile (2, 3, 4) fixiert.

## Claims

1. Method for cutting to length a tube section (1) from a tube, which tube comprises an inner tube (2) and an outer tube casing (3) surrounding the inner tube (2), wherein, with the aid of a cutting tool, the tube section (1) is cut off from the tube at a cutting point in a cutting plane oriented transversely to the longitudinal extension of the tube, wherein the tube casing (3) of the tube is enclosed by means of a tube fixing piece (4) which can be cut through and which covers the provided cutting point before the tube section (1) is cut off from the tube at the cutting point with the aid of the cutting tool, wherein the tube fixing piece (4) completely surrounds the outer tube casing (3) in the peripheral direction, and wherein the tube fixing piece (4) is so fixed on the tube casing (3) and/or the tube surrounded by the tube fixing piece (4) is so cut through with the aid of the cutting tool that a relative displacement of the tube fixing piece (4) with respect to the tube casing (3) or of the tube casing (3) with respect to the inner tube (2) is prevented, **characterised in that** the tube fixing piece (4) formed as a single-sided adhesive tape has a middle piece (6) completely surrounding the tube and adjoined by tube fixing end pieces (7, 8) on both sides, that the tube fixing end pieces (7, 8) lie with their adhesive surfaces (9) against one another and that the tube fixing end pieces (7, 8), which lie with their adhesive surfaces (9) against one another, are placed against the tube such that the adhesive surface (9) of one of the tube fixing end pieces (7, 8) is adhesively held with a partial region protruding over the other tube fixing end piece (7, 8) against the tube or against the tube section.

2. Tube piece (1) having an inner tube (2) and an outer tube casing (3) surrounding the inner tube (2), which tube casing (3) is enclosed by a tube fixing piece (4) which can be cut through and is cut to length, which tube fixing piece reaches as far as a cutting plane formed through an end-face end of the tube piece and oriented transversely to the longitudinal extension of the tube piece (1), and which (4) at least completely surrounds the outer tube casing (3) in the peripheral direction with an angle of contact of at least 360°, wherein the tube fixing piece (4) is so fixed on the outer tube casing (3) that a relative displacement of the tube fixing piece (4) with respect to the tube casing (3) or of the tube casing (3) with respect to the inner tube (2) is prevented, **characterised in that** the tube fixing piece (4) formed as a single-sided adhesive tape has a middle piece (6) completely surrounding the tube and adjoined by tube fixing end pieces (7, 8) on both sides, that the tube fixing end pieces (7, 8) lie with their adhesive surfaces (9) against one another and that the tube fixing end pieces (7, 8), which lie with their adhesive surfaces (9) against one another, are placed against the tube such that the adhesive surface (9) of one of the tube fixing end pieces (7, 8) is adhesively held with a partial region protruding over the other tube fixing end piece (7, 8) against the tube or against the tube section.

3. Method or tube piece as claimed in any one of claims 1 or 2, **characterised in that** the tube is cut to length by means of a cutting blade (12) serving as a cutting tool and being guided approximately perpendicularly to the longitudinal direction of the tube.

4. Method or tube piece as claimed in any one of claims 1 to 3, **characterised in that** a clamping sleeve, a crimping sleeve or similar tube end piece (5) is slid onto the end of the tube section (1) secured with the aid of the tube fixing piece (4) and that the tube fixing piece (4) protrudes over the inner end of the tube end piece (5) and provides anti-kinking protection.

5. Method or tube piece as claimed in any one of claims 1 to 4, **characterised in that** the tube is cut to length by means of a cutting tool (13) developing a cutting heat, and in particular preferably in such a way that the synthetic material of at least one of the components: tube fixing piece (4), tube casing (3) or inner tube (2), which becomes plastic under cutting heat, fixes at least in regions to at least one of the adjacent components (2, 3, 4).

## Revendications

1. Procédé pour diviser une portion de tube (1) en plusieurs portions à partir d'un tube, ledit tube présentant un tube intérieur (2) et une gaine de tube extérieure (3) entourant le tube intérieur (2), dans lequel on sépare la portion de tube (1) du tube à l'aide d'un outil de coupe en un endroit de coupe dans un plan de coupe orienté transversalement à l'extension longitudinale de ce tube, dans lequel on enveloppe la gaine de tube (3) du tube au moyen d'une fixation de tube à trancher (4) qui recouvre l'endroit de coupe prévu, avant que la portion de tube (1) soit séparée du tube à l'endroit de coupe au moyen de l'outil de coupe, dans lequel la fixation de tube (4) entoure la gaine de tube extérieure (3) entièrement dans la direction périphérique et dans lequel on fixe la fixation de tube (4) sur la gaine de tube (3) de telle manière et/ou on sépare le tube entouré par la fixation de tube (4) à l'aide de l'outil de coupe de telle manière qu'un déplacement relatif de la fixation de tube (4) par rapport à la gaine de tube (3) ou de la gaine de tube (3) par rapport au tube intérieur (2) soit empêché, **caractérisé en ce que** la fixation de tube (4) réalisée sous forme de bande adhésive à une seule face adhésive comporte une partie médiane (6) entourant entièrement le tube, à laquelle se raccordent de part et d'autre des parties d'extrémité (7, 8) de la fixation de tube, **en ce que** les parties d'extrémité (7, 8) de la fixation de tube sont appliquées l'une sur l'autre par leurs faces adhésives (9) et **en ce que** les parties d'extrémité (7, 8) de la fixation de tube appliquées l'une sur l'autre par leurs faces adhésives (9) sont appliquées sur le tube de telle manière que la face adhésive (9) de l'une des parties d'extrémité (7, 8) de la fixation de tube soit maintenue par adhérence sur le tube ou sur la portion de tube au moyen d'une région partielle dépassant l'autre partie d'extrémité (7, 8) de la fixation de tube.

2. Portion de tube (1) avec un tube intérieur (2) et une gaine de tube extérieure (3) entourant le tube intérieur (2), ladite gaine de tube (3) étant enveloppée par une fixation de tube (4) divisée à trancher qui s'étend jusqu'à un plan de coupe formé par une extrémité frontale de la portion de tube et orienté transversalement à l'extension longitudinale de la portion de tube (1) et qui (4) entoure la gaine de tube extérieure (3) au moins entièrement dans la direction périphérique avec un angle de contact d'au moins 360°, dans laquelle la fixation de tube (4) est fixée sur la gaine de tube extérieure (3) de telle manière qu'un déplacement relatif de la fixation de tube (4) par rapport à la gaine de tube (3) ou de la gaine de tube (3) par rapport au tube intérieur (2) soit empêché, **caractérisée en ce que** la fixation de tube (4) réalisée sous forme de bande adhésive à une seule face adhésive comporte une partie médiane (6) entourant entièrement le tube, à laquelle se raccordent de part et d'autre des parties d'extrémité (7, 8) de la fixation de tube, **en ce que** les parties d'extrémité (7, 8) de la fixation de tube sont appliquées l'une sur l'autre par leurs faces adhésives (9) et **en ce que** les parties d'extrémité (7, 8) de la fixation de tube appliquées l'une sur l'autre par leurs faces adhésives (9) sont appliquées sur le tube de telle manière que la face adhésive (9) de l'une des parties d'extrémité (7, 8) de la fixation de tube soit maintenue par adhérence sur le tube ou sur la portion de tube au moyen d'une région partielle dépassant l'autre partie d'extrémité (7, 8) de la fixation de tube.

3. Procédé ou portion de tube selon l'une des revendications 1 ou 2, caractérisé(e) en ce que le tube est divisé au moyen d'une lame de coupe (12) servant d'outil de coupe et guidé sensiblement perpendiculairement à la direction longitudinale du tube.

4. Procédé ou portion de tube selon l'une des revendications 1 à 3, caractérisé(e) en ce qu'une douille de serrage, une douille de sertissage ou une pièce d'extrémité de tube similaire (5) est glissée sur l'extrémité de la portion de tube (1) maintenue à l'aide de la fixation de tube (4) et en ce que la fixation de tube (4) est saillante au-delà de l'extrémité intérieure de la pièce d'extrémité de tube (5) et forme une protection contre le pliage.

5. Procédé ou portion de tube selon l'une des revendications 1 à 4, caractérisé (e) en ce que le tube est divisé au moyen d'un outil de coupe (13) développant un chauffage de coupe, notamment de préférence de telle manière que le matériau en plastique d'au moins l'un des composants suivants: fixation de tube (4), gaine de tube (3) ou tube intérieur (2), qui devient pâteux pendant le chauffage de coupe, se fixe au moins localement à au moins l'un des composants voisins (2, 3, 4).
